Europäisches Patentamt

European Patent Office

Office européen des brevets

(11) Veröffentlichungsnummer: **0 425 791 A1**

# EUROPÄISCHE PATENTANMELDUNG

(21) Anmeldenummer: 90116747.8

(22) Anmeldetag: 31.08.90

(51) Int. Cl.⁵: **C08F 265/04**, //(C08F265/04, 214:06)

(30) Priorität: 28.10.89 DE 3936066

(43) Veröffentlichungstag der Anmeldung:
08.05.91 Patentblatt 91/19

(84) Benannte Vertragsstaaten:
BE CH DE FR GB IT LI NL SE

(71) Anmelder: HÜLS AKTIENGESELLSCHAFT
Patentabteilung / PB 15 - Postfach 13 20
W-4370 Marl 1(DE)

(72) Erfinder: Schmidt, Frank, Dr.
Herbrüggenstrasse 148 a
W-4300 Essen 11(DE)

(54) Verfahren zur Herstellung eines Vinylchlorid-Butylacrylat-Pfropfcopolymeren für die Spritzgiessverarbeitung.

(57)
2.1 Die bisherigen Verfahren zur Herstellung von Vinylchloridpolymerisaten für die Spritzgießverarbeitung weisen noch einige Nachteile auf. So sind z. B. die Oberflächen der PVC-Fertigteile nicht einwandfrei oder von rauher Beschaffenheit, weiter bleiben die mechanischen Eigenschaften der Endprodukte, wie die Kerbschlagzähigkeit, verbesserungswürdig.

2.2 Durch das erfindungsgemäße Verfahren werden durch Aufpropfen von Vinylchlorid auf vernetztes Polybutylacrylat in Anwesenheit von Kettenreglern Produkte für das Spritzgießverfahren hergestellt, die neben einer guten Oberflächenbeschaffenheit hervorragende mechanische Eigenschaften aufweisen.

2.3 Die Polymerisate werden zur Herstellung von Formkörpern verwendet.

EP 0 425 791 A1

Xerox Copy Centre

# VERFAHREN ZUR HERSTELLUNG EINES VINYLCHLORID-BUTYLACRYLAT-PFROPFCOPOLYMEREN FÜR DIE SPRITZGIESSVERARBEITUNG

Gegenstand der Erfindung ist ein Verfahren zur Herstellung eines Pfropfcopolymerisates von Vinylchlorid (VC) auf ein vernetztes Butylacrylat-Polymeres, das verbesserte Verarbeitungseigenschaften insbesondere beim Spritzgießen aufweist, ohne daß dabei ein Verlust der guten physikalischen Eigenschaften eintritt.

Es hat in der Vergangenheit nicht an Versuchen gefehlt, die Verarbeitbarkeit von VC-Polymerisaten zu verbessern, d. h. die Viskosität der Polymerschmelze zu erniedrigen, die bei gegebener Temperatur und Schergeschwindigkeit abhängig ist von der mittleren Molmasse des Polyvinylchlorids (PVC).

So kann man durch Verwendung von Polyvinylchlorid mit niedriger mittleren Molmasse bei enger Molmassenverteilung leichtfließende Polymerschmelzen erhalten, die aber schlechte mechanische Eigenschaften als Fertigteil aufweisen (Pol. Eng. Sci. 17(1977), 194 ff.). Es sind daher Verfahren entwickelt worden, die zum Ziel haben, die Molmassenverteilung des Polyvinylchlorids zu verbreitern.

So wird gemäß der DE-OS 26 51 532 eine mechanische Mischung von Polyvinylchlorid-Pulvern mit unterschiedlichen mittleren Molmassen vorgenommen. Dieses Verfahren ist in der Technik jedoch aufwendig und ergibt Pulver, die auf Spritzgießmaschinen nur dann zu glatten Fertigteiloberflächen verarbeitbar sind, wenn die mittleren Molmassen der Mischkomponenten nicht allzu verschieden sind. Die dabei erreichte Senkung der Schmelzviskosität ist aber gering. Mischt man dagegen zwei Pulver mit sehr unterschiedlichen mittleren Molmassen ab, so ergeben sich PVC-Fertigteile mit rauhen Oberflächen und Fließlinien. Die Ursache dafür liegt in der Heterogenität des Pulvers. Die sehr niedermolekularen PVC-Körner schmelzen in der Plastifizierzone der Spritzgießmaschine schneller als die hochmolekularen PVC-Körner, reduzieren die Schmelzviskosität und verschlechtern dadurch, ähnlich einem zu hohen Zusatz eines Gleitmittels, den Plastifiziervorgang für den hochmolekularen Anteil, was zu den Fehlern am Fertigteil führt.

Der Nachteil der Pulverheterogenität hinsichtlich der Molmasse wird im Verfahren der DE-OS 26 06 934 vermieden. Diese beschreibt die Möglichkeit der Variation der Molmasse bei der VC-Suspensionspolymerisation durch die gleichzeitige Anwesenheit von regelnden (die Molmasse senkenden) und verzweigenden (die Molmasse erhöhenden) Stoffen. Die dabei erreichbare Reduzierung der PVC-Schmelzviskosität steht mit den Einsatzmengen der regelnden und verzweigenden Komponenten in einem Zusammenhang. Je höher die Mengen, um so geringer die Schmelzviskosität. Es ist aber nach diesem Verfahren nicht möglich, aus Pulvermaterial mit reduzierter Schmelzviskosität Polyvinylchlorid-Formteile zu spritzen, die eine einwandfreie glatte Oberflächenbeschaffenheit haben, wie Versuche gezeigt haben. Die Ursache dafür liegt in der Natur der verzweigenden Komponente, die zu einer Vernetzung der Makromoleküle - erkenntlich an z. B. in Cyclohexanon unlöslichen Gelpartikeln - führt.

Die DE-OS 19 43 638 vermeidet den Einsatz verzweigender Komponenten. Das Verfahren sieht hier die Verbreiterung der Molmassenverteilung durch Polymerisation bei verschiedenen Temperaturen vor, wobei gegebenenfalls molmassenregelnde Substanzen anwesend sein können. Die Verringerung der Schmelzviskosität (für Produkte mit gleichem mittleren Molekulargewicht) bleibt dabei jedoch vergleichsweise gering. Eine Fließverbesserung wird auch in der EP 0 137 138 B1 durch umsatzbezogenen Zusatz von regelnden Substanzen und Polymerisation bei mindestens zwei verschiedenen Temperaturen beschrieben. Hierbei kommt es ebenfalls zu einer Verbreiterung der Molmassenverteilung. Die mechanischen Eigenschaften der Fertigteile, wie z. B. die Kerbschlagzähigkeit, bleiben jedoch verbesserungswürdig.

Eine Verbesserung der Schlagfestigkeit des PVC kann erreicht werden durch Einarbeiten von Kautschuk oder anderen bei Raumtemperatur zähelastischen Hochpolymeren. Dies kann z. B. geschehen durch Mischen bei hohen Temperaturen auf der Walze oder durch Vermischen der Dispersionen eines Polyvinylchlorids und eines zähelastischen Polymers oder schlagzäh modifizierten PVC. Auch bei Verwendung eines niedrigmolekularen Polyvinylchlorids kann jedoch keine ausreichend niedrige Schmelzviskosität erzielt werden, die eine Verwendung des Gemisches zur Herstellung großer dünnwandiger Formteile erlauben würde: an den Fertigteilen treten Schublinien auf.

Überraschenderweise wurde nun gefunden, daß durch Pfropfcopolymerisation von VC auf 1 bis 20 Gewichtsprozent eines vernetzten Polybutylacrylats in wäßriger Dispersion bei gleichzeitigem Einsatz von kettenübertragend wirkenden Substanzen ein Produkt mit guter Korngrößenverteilung und enger Molmassenverteilung erhalten werden kann, dessen geringe Schmelzviskosität es für die Verarbeitung z. B. im Spritzgießverfahren anbietet und dessen Kerbschlagzähigkeit gegenüber Homopolymerisaten verbessert ist, ohne daß dabei jedoch ein Verlust der Wärmeformbeständigkeit oder der Oberflächenbeschaffenheit der hergestellten Fertigteile hingenommen werden muß.

Vorzugsweise wird ein Verfahren in wäßriger Suspension angewandt, bei dem die Polymerisation bis zu einem Umsatz von 80 bis 90 % durchgeführt wird. Das Polybutylacrylat kann zusammen mit dem Vinylchlorid vorgelegt werden. Es können aber auch sowohl PBA als Dispersion oder VC zudosiert werden. Das Polybutylacrylat selbst wird nach bekannten Verfahren in Gegenwart vernetzend wirkender Substanzen hergestellt. Als Suspensionsstabilisatoren sind alle für die VC-Polymerisation bekannten und üblicherweise eingesetzten Verbindungstypen, wie sie z. B. in der Monographie Kainer, Polyvinylchlorid und Vinylchlorid-Mischpolymerisate, Springer-Verlag Berlin, Heidelberg, New York (1965), Seite 16 ff., beschrieben sind, geeignet. Zusätzlich können der Polymerisationsmischung oberflächenaktive Mittel zugefügt werden, um die Dispersion des Monomers zu verbessern.

Es können alle bekannten öllöslichen freie Radikale erzeugende Substanzen für die Initiierung eingesetzt werden, wie beispielsweise Acetylcyclohexylsulfonylperoxid, Alkylperneodecanoat, Dialkylperoxidicarbonat, Dilaurylperoxid, Azodiisobutyronitril oder Alkylperpivalate. Der Initiator sollte in Konzentrationen von 0,01 bis 5, vorzugsweise 0,02 bis 2 Gewichtsprozent eingesetzt werden. Es können auch Gemische verwendet werden. Als Molekulargewichtsregler in Frage kommen Substanzen wie z. B. Thioglycolsäure und deren Ester, Mercaptoethanol, lineare und verzweigte Mercaptane, Disulfide, gesättigte und ungesättigte Chlorkohlenwasserstoffe, wie z. B. Trichlorethylen oder Dichlorethylen, Methallylchlorid usw., oder aliphatische Aldehyde, wie Butyraldehyd oder Ethylhexanal. Der Zusatz des Reglers oder eines Gemisches mehrerer Regler kann zu einem einzigen Zeitpunkt oder aber auch dosiert erfolgen. Die Menge hängt von dessen Wirksamkeit bei der Molmassenerniedrigung ab. Ein quantitatives Maß dafür ist die Kettenübertragungskonstante, die für das System Vinylchlorid/Regler z. B. in Encycl. of Pol. Sci./Tech., Band 14, Seite 332, tabelliert ist. Die Zusatzmenge sollte allgemein im Bereich von 0,01 bis 5 Gewichtsprozent, vorzugsweise 0,02 bis 3 Gewichtsprozent, liegen.

Als weitere Hilfsstoffe sind gegebenenfalls pH-Puffersubstanzen, wie Ammoniumsalze, Alkalicarbonate, Hilfsstoffe gegen Wandanbackungen, Antioxidantien, zu verwenden.

Die durchschnittliche Molmasse des Polyvinylchlorids verhält sich reziprok zur Polymerisationstemperatur. Zur Erzielung niedriger Molmassen ist daher eine Temperatur von 50 bis 80 °C, vorzugsweise 60 bis 75 °C, einzuhalten.

Zur weiteren Erläuterung der Erfindung dienen die folgenden Beispiele. Die angegebenen Teile sind Gewichtsteile.

Beispiel 1

In einem mit Impellerrührer und Pfaudlerstromstörer ausgerüsteten 40-l-Polymerisationskessel aus rostfreiem Stahl werden zu 14 000 Teilen Wasser, 2 300 Teilen einer 25%igen Dispersion vernetzten Polybutylacrylats, 55 Teilen eines teilverseiften Polyvinylacetats, 12 Teilen Sorbitanmonolaurat, 12 Teilen Dilaurylperoxid sowie 4 Teilen 2-Mercaptoethanol 9 500 Teile Vinylchlorid gegeben.

Die Reaktionsmischung wird auf 70 °C erhitzt und bis zu einem Enddruck von 5 bar polymerisiert. Das Produkt wird entwässert, getrocknet und analytisch bzw. anwendungstechnisch untersucht (Tabelle 1).

Bei gutem Fließverhalten (Spirallänge) fällt die hohe Kerbschlagzähigkeit des erfindungsgemäß hergestellten Produktes auf. Die Korngrößenverteilung erfüllt die an ein Spritzguß-PVC zu stellenden Anforderungen.

Beispiel 2

Es wird wie in Beispiel 1 verfahren, jedoch anstelle von Mercaptoethanol 100 Teile Trichlorethylen als Regler verwendet. Wie in Beispiel 1 liegen Fließverhalten und Kerbschlagzähigkeit deutlich über den nach Stand der Technik polymerisierten Produkten.

Beispiel 3

Wiederum wird gemäß Beispiel 1 vorgegangen. Als Regler wird Ethylhexanol zugesetzt. Die anwendungstechnischen Eigenschaften entsprechen denen der vorangegangenen Beispiele und zeigen die angestrebte Kombination von guter Kerbschlagzähigkeit und Fließeigenschaft.

Vergleichsversuch 1

In einem 40-l-Polymerisationskessel mit Impellerrührer und Pfaudlerstromstörer werden 10 000 Teile Vinylchlorid mit 16 Teilen einer Hydroxyalkylcellulose in 16 000 Teilen Wasser dispergiert. Nach Zusatz von 5 Teilen Mercaptoethanol als Kettenüberträger sowie eines Initiatorgemisches aus 12 Teilen Dilaurylperoxid und 7 Teilen Dicetylperoxodicarbonat wird die Polymerisation bei 70 °C bis zu einem Enddruck von 5 bar durchgeführt. Die Aufarbeitung und Untersuchung erfolgt wie in Beispiel 1. Das Produkt zeigt bei enger Molmassenverteilung ein erwartet gutes Fließverhalten, besitzt dabei aber unzureichende Kerbschlagzähigkeit. Die Korngrößenverteilung läßt zudem keine einwandfreie Verarbeitung des Polymerisats im Spritzgießverfahren zu.

Vergleichsversuch 2 (gemäß DE-OS 19 43 638)

Ein mit Impellerrührer und Pfaudlerstromstörer ausgerüsteter 40-l-Polymerisationskessel aus rostfreiem Stahl wird mit folgenden Bestandteilen beschickt: 20 000 Teile Wasser, welches gelöst enthält 15 Teile eines teilverseiften Polyvinylacetats und in welchem dispergiert sind 10 Teile Dilaurylperoxid und 20 Teile Dicetylperoxodicarbonat, 10 000 Teile Vinylchlorid und 150 Teile Methallylchlorid. Der Kessel wird zunächst auf 43 °C aufgeheizt und 7 Stunden bei dieser Temperatur gehalten. Anschließend wird die Polymerisation bei 65 °C bis zu einem Enddruck von 5 bar weitergeführt. Die Fließverbesserung dieses Produktes ist gering, die Kerbschlagzähigkeit, wie in Vergleichsversuch 1, schlecht.

Vergleichsversuch 3 (gemäß EP 0 137 138 B1)

Es wird wie in Vergleichsversuch 2 verfahren, jedoch werden 5,5 Stunden (38 % Umsatz) nach Erreichen der 1. Polymerisationstemperatur von 43 °C 300 Teile Methallylchlorid zugesetzt. 15 Minuten nach der Reglerzugabe wird auf 74 °C erhitzt und bis zu einem Enddruck von 10 bar polymerisiert. Das Produkt besitzt eine sehr breite Molmassenverteilung, ausgezeichnetes Fließverhalten, aber eine unzureichende Kerbschlagzähigkeit.

Vergleichsversuch 4

Es wird eine Abmischung gemacht aus 65 Teilen eines TCE-geregelten PVC mit K-Wert 52, 27 Teilen des Standard-PVC (siehe Tabelle 1) und 8 Teilen des Schlagzäh-Modifiers Paraloid KM 323 B.

Diese Mischung wird wie die anderen Versuchsprodukte einer anwendungstechnischen Prüfung unterworfen. Die Spirallänge erreicht dabei ebensowenig die Werte der erfindungsgemäß hergestellten Produkte wie die Kerbschlagzähigkeit. Zudem treten teilweise Bläschen an der Fließfront der Schmelze auf.

## Tabelle 1

| | Bsp. 1 | Bsp. 2 | Bsp. 3 | Standard-PVC | Vgl.-vers. 1 | Vgl.-vers. 2 | Vgl.-vers. 3 | Vgl.-vers. 4 |
|---|---|---|---|---|---|---|---|---|
| Polymerisationstemp. [°C] | 70 | 70 | 70 | 70 | 70 | 43/65 | 43/74 | – |
| Regler[1] [Gew.-%] | ME, 0,043 | TCE, 1,0 | EH 0,8 | – | ME 0,05 | MAC 1,5 | MAC 3,0 nach 38 % Umsatz | Abmischung K=52: 65 T K=58: 27 T KM323B: 8 T |
| Acrylatgehalt [%] | 8,0 | 7,0 | 8,3 | – | – | – | – | – |
| Siebrückstand [%] 63 μ | 90 | 97 | 94 | 96 | | 92 | 94 | |
| 200 μ | 2 | 1 | 0,5 | 8 | >99 | 4 | 12 | |
| Uneinheitlichkeit $U = \dfrac{M_w}{M_w} - 1$ | 1,04 | 1,68 | 1,34 | 0,82 | 2,1 | | 6,0 | |

EP 0 425 791 A1

Tabelle 1 - Fortsetzung

| | Bsp. 1 | Bsp. 2 | Bsp. 3 | Standard-PVC | Vgl.-vers. 1 | Vgl.-vers. 2 | Vgl.-vers. 3 | Vgl.-vers. 4 |
|---|---|---|---|---|---|---|---|---|
| K-Wert[2] | 51,7 | 51,4 | 52,4 | 58,0 | 51,4 | 55,5 | 58,5 | |
| Spirallänge[3] [cm] | 43,5 | 43 | 42 | 32 | 42 | 38 | 54 | 37 |
| Vicattemperatur[4] [°C] | 71 | 71 | 71 | 75 | 72 | 72 | 71 | 73 |
| Kerbschlagzähigkeit[5] $a_K$ $\left[\dfrac{kJ}{m^2}\right]$ RT | 10,5 | 11 | 12 | 2,7 | 2,3 | 1,9 | 1,4 | 6,9 |
| 0 °C | 4,4 | 4,5 | 4,5 | 2,4 | 2,2 | 1,5 | 1,2 | 3,1 |
| Oberfläche des Fertigteils | glatt | glatt | glatt | glatt | glatt | glatt | glatt | Bläschen |

EP 0 425 791 A1

### Tabelle 1 - Erklärungen

1) ME = Mercaptoethanol
   TCE = Trichlorethylen
   MAC = Methallylchlorid
   EH = Ethylhexanal

2) DIN 53 726

3) Praxisnahe Prüfung der Fließfähigkeit:

100 Teile PVC werden mit 2,5 Teilen eines Ba/Cd-Stabilisators und gegebenenfalls rezepturüblichen Mengen eines Gleitmittels in einem Schnellmischer gemischt. Diese Mischung wird auf einer Spritzgußmaschine zu Spiralen mit einem rechteckigen Querschnitt (20 mm breit, 2 mm hoch) verarbeitet. Die Länge (in cm) der Spiralen wird als Maß der Fließfähigkeit des Produktes ausgewertet.

4) DIN 53 460 (VST/B/50)

5) nach Charpy

**Ansprüche**

1. Verfahren zur Herstellung eines für die Spritzgußverarbeitung geeigneten Vinylchlorid-Butylacrylat-Pfropfcopolymeren in wäßrigen Dispersion,
dadurch gekennzeichnet,
daß die Polymerisation von Vinylchlorid in Gegenwart von vernetztem Polybutylacrylat erfolgt und daß dabei als Regler Substanzen aus der Gruppe organischer Thioverbindungen, gesättigter oder ungesättigter Chlorkohlenwasserstoff oder aliphatischer Aldehyde eingesetzt werden.
2. Verfahren nach Anspruch 1,
dadurch gekennzeichnet,
daß die Substanzen aus der Gruppe organischer Thioverbindungen 2-Mercaptoethanol, Thioglycolsäure oder Bisisopropylxanthogendisulfid, die aus der Gruppe gesättigter oder ungesättigter Chlorkohlenwasserstoff Trichlorethylen oder Methallylchlorid und die aus der Gruppe aliphatischer Aldehyde Butyraldehyd oder Ethylhexanal sind.
3. Verfahren nach Anspruch 1,
dadurch gekennzeichnet,
daß die Regler in Mengen von 0,01 bis 5 Gewichtsprozent (bezogen auf Vinylchlorid-Monomer) eingesetzt werden.
4. Verfahren nach Anspruch 1,
dadurch gekennzeichnet,
daß vernetztes Polybutylacrylat in einer Menge von 1 bis 20 Gewichtsprozent (bezogen auf Vinylchlorid-Monomer) zugegen ist.

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-8 907 115  (WACKER-CHEMIE GmbH)<br>* Patentansprüche 1-2; Seite 5, Zeilen 18-22 *<br>– – – | 1-3 | C 08<br>F 265/04 //<br>(C 08 F 265/04<br>C 08 F 214:06 ) |
| X | FR-A-2 350 361  (SOLVAY & CIE)<br>* Patentansprüche 1,6-7,12-13; Beispiele 1-4 *<br>– – – | 1,3-4 | |
| X | US-A-4 162 239  (R. NICOLET et al.)<br>* Patentansprüche 1,4,12-14 *<br>– – – | 1,3-4 | |
| A | DATABASE WPIL, Nr. 82-62386E [30], Derwent Publications Ltd, London, GB;<br>& JP-A-57 098 543 (KANEGAFUCHI CHEM. K.K.)<br>18-06-1982<br>* Zusammenfassung, Zeilen 1,6-14 *<br>– – – | 1 | |
| A | DATABASE WPIL, Nr. 82-23188E [12], Derwent Publications Ltd, London, GB;<br>& JP-A-57 028 124 (TOKUYAMA SODA K.K.) 15-02-1982<br>* Zusammenfassung, Zeilen 7-10 *<br>– – – – – | 2 | |

| RECHERCHIERTE SACHGEBIETE (Int. Cl.5) |
|---|
| C 08 F |

Der vorliegende Recherchenbericht wurde für alle Patentansprüche erstellt

| Recherchenort | Abschlußdatum der Recherche | Prüfer |
|---|---|---|
| Den Haag | 07 Januar 91 | PERSSON E.K.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument